# EUROPÄISCHE PATENTANMELDUNG

(11) **EP 2 605 039 A1**
(43) Veröffentlichungstag der Anmeldung: **19.06.2013**
(21) Anmeldenummer: 12193591.0
(22) Anmeldetag: 21.11.2012
(51) Int. Cl.: G01S 15/93

(54) **Verfahren zur Erkennung von Objekten im Umfeld eines Fahrzeugs**

(30) Priorität: 13.12.2011 DE 102011088401
(71) Anmelder: ROBERT BOSCH GMBH, 70442 Stuttgart (DE)
(72) Erfinder: Schneider, Marcus, 71642 Ludwigsburg (DE)

(57) **Zusammenfassung**

Verfahren zum Betreiben eines Assistenzsystems eines Fahrzeugs mit mindestens einem Ultraschallsensor, wobei der Ultraschallsensor in Abhängigkeit von mindestens einer Betriebsbedingung des Fahrzeugs Ultraschallsignale aussendet und empfängt, wobei ein Steuergerät aus Signallaufzeiten von reflektierten Ultraschallsignalen Abstände zu Objekten im Umfeld des Fahrzeugs berechnet, wobei das Steuergerät anhand der reflektierten Ultraschallsignale eine Klassifizierung der Objekte durchführt, wobei bei langsamer Fahrt und/oder Stillstand des Fahrzeugs das Steuergerät die Klassifizierung anhand einer Bewertung eines Verhältnisses von detektierten reflektierten Ultraschallsignalen mit Mehrfachechos zur Gesamtzahl an detektierten reflektierten Ultraschallsignalen des Ultraschallsensors innerhalb eines Bewertungszeitraums durchführt.

## Beschreibung

Die Erfindung geht aus von einem Verfahren und einer Vorrichtung für ein Assistenzsystem eines Fahrzeugs zur Erkennung und Klassifizierung von Objekten im Umfeld des Fahrzeugs gemäß dem Oberbegriff der unabhängigen Ansprüche.

### Stand der Technik

Zur Erkennung von Objekten im Umfeld eines Fahrzeugs sind verschiedene Fahrassistenzsysteme bekannt, die Objekte erkennen und diese einem Fahrer optisch und/oder akustisch darstellen. Derartige Systeme verwenden beispielweise Ultraschallsensoren, um Objekte im Umfeld zu erkennen.

In der DE 10 2007 061 235 A1 ist ein Verfahren zur Klassifizierung von Abstandsdaten aus einem Abstandsdetektionssystem beschrieben. Dazu werden Objekte anhand der Korrelation statistischer Streuungen nach der Objekthöhe klassifiziert. Zur Parklückenlokalisierung werden zwei Ultraschallsensoren an der jeweiligen Fahrzeugfront eingesetzt und je nach statistischer Streuung der gemessenen Abstände wird zwischen hohen Objekten, nicht überfahrbaren und niedrigen, überfahrbaren Objekten unterschieden.

Aus der DE 10 2009 041 557 A1 ist ein Verfahren zur Überwachung des seitlichen Umfelds eines Fahrzeugs bekannt. Dabei wird insbesondere eine Beleuchtungseinrichtung automatisch eingeschaltet, wenn die Erfassungseinrichtung in der Fahrzeugumgebung ein Objekt erfasst hat.

In der DE 10 2006 008 636 A1 ist ein Verfahren zur Objekterkennung für ein Fahrzeug beschrieben, wobei die von einem Ultraschallsensor eingehenden Daten zur Klassifizierung eines erkannten Objekts verwendet werden. Dabei sendet der Ultraschallsensor fortlaufend Schallimpulse aus, deren von einem Objekt reflektierte Echosignale empfangen werden und in elektrische Signale umgewandelt werden. Eine Auswerte- und Steuereinheit wertet Art und/oder Intensität und/oder Muster der reflektierten Echosignale aus und erzeugt Merkmale, welche zur Klassifizierung des Objekts geeignet sind.

### Offenbarung der Erfindung

### Vorteile der Erfindung

Die erfindungsgemäße Vorgehensweise mit den kennzeichnenden Merkmalen der unabhängigen Ansprüche weist demgegenüber den Vorteil auf, dass Fehlwarnungen durch Klassifizierung von Objekten im Umfeld des Fahrzeugs bei langsamer Fahrt und/oder Stillstand eines Fahrzeugs reduziert werden.

Weitere vorteilhafte Ausführungsformen der vorliegenden Erfindung sind Gegenstand der Unteransprüche.

Bei herkömmlichen Assistenzsystemen zur Erkennung von Objekten im Toten-Winkel eines Fahrzeugs ist es notwendig, dass das Fahrzeug in Bewegung ist. Daher kommt es vor allem bei Abbiegevorgängen direkt nach dem Anfahren des Fahrzeugs zu kritischen Fahrsituationen, da keine Warnung an den Fahrer ergeht. Vorteilhafterweise wird bei dem erfindungsgemäßen Verfahren eine Klassifizierung von Objekten im Umfeld des Fahrzeugs anhand von Sensoren bei einer Fahrtgeschwindigkeit kleiner 10 km/h durchgeführt. Anhand dieser Klassifizierung der Objekte wird eine Warnung an den Fahrer ausgegeben, wodurch die Anzahl von kritischen Fahrsituationen verringert wird.

Im Umfeld des Fahrzeugs erkannte Objekte, beispielsweise bodennahe Objekte wie Bordsteine und/oder Leitplanken, werden einer ersten Gruppe zugeordnet, bei denen der Fahrer des Fahrzeugs keine Warnung erhält. Andere Objekte, beispielsweise nicht-bodennahe Objekte wie Autos, Fußgänger und/oder Fahrradfahrer, werden einer zweiten Gruppe zugeordnet, bei denen eine Warnung an den Fahrer erfolgt.

Vorteilhafterweise werden zur Klassifizierung von Objekten im Umfeld des Fahrzeugs eine Anzahl von zusammengehörigen Echos ermittelt, sogenannte Mehrfachechos. In Abhängigkeit eines Verhältnisses von reflektierten Signalen mit Mehrfachechos der Sensoren zu einer Gesamtzahl von reflektierten Signalen der Sensoren innerhalb eines Bewertungszeitraums wird die Klassifizierung durch das Steuergerät durchgeführt.

Das berechnete Verhältnis wird mit einem in dem Steuergerät gespeicherten Schwellenwert verglichen. Bei Überschreitung erfolgt eine Warnung an den Fahrer.

Die Warnung an den Fahrer erfolgt vorteilhafterweise akustisch, optisch, haptisch und/oder einer Mischung aus diesen. Beispielsweise wird die Bremse selbständig durch das Steuergerät kurz betätigt und/oder eine multimediale Einrichtung des Fahrzeugs wird lautlos geschaltet.

In einer weiteren vorteilhaften Ausführungsform kann bereits eine Warnung erfolgen, wenn nur ein Sensor ein Objekt im Umfeld des Fahrzeugs einer zweiten Gruppe zuordnet. So wird beispielsweise auch dann eine Warnung ausgegeben, wenn, treten Mehrfachechos nur auf einer Seite des Fahrzeugs nur bei einem rückwärts gerichteten Sensor auftreten, während ein vorwärts gerichteter Sensor beispielsweise keine reflektierten Signale empfängt.

Für den mindestens einen Sensor werden Ultraschallsensoren eingesetzt. Als weitere Ausführungsform können beispielsweise auch Radarsensoren und/oder kapazitive Sensoren mit einer höheren Messgenauigkeit eingesetzt werden.

Vorteilhafterweise kann zur Klassifizierung neben dem Verhältnis von reflektierten Signalen mit Mehrfachechos der Sensoren zu der Gesamtzahl von reflektierten Signalen der Sensoren innerhalb eines Bewertungszeitraums zusätzlich die Anzahl der ausgesandten Signale berücksichtigt werden, beispielsweise um eine weitere Reduzierung von Fehlwarnungen zu erreichen.

### Kurzbeschreibung der Figuren

Ausführungsbeispiele der Erfindung sind in der Zeichnung dargestellt und in der nachfolgenden Beschreibung näher erläutert.

Es zeigt:
- Figur 1: eine schematische Darstellung einer Ausführungsform einer Vorrichtung nach dem Stand der Technik;
- Figur 2: eine schematische Darstellung des erfindungsgemäßen Verfahrens anhand einer Fahrsituation mit zwei Fahrzeugen;
- Figur 3: eine schematische Darstellung des erfindungsgemäßen Verfahrens anhand einer Fahrsituation mit einem Bordstein;
- Figur 4a: eine Auftragung von einer Anzahl von gemessenen Detektionen innerhalb von zwei Messintervallen über der Zeit;
- Figur 4b: eine Auftragung von berechneten Abständen anhand von Signallaufzeiten innerhalb von zwei Messintervallen über der Zeit;
- Figur 5a: eine Auftragung von einer Anzahl von gemessenen Detektionen innerhalb von zwei Messintervallen über der Zeit; und
- Figur 5b: eine Auftragung von berechneten Abständen anhand von Signallaufzeiten innerhalb von zwei Messintervallen über der Zeit.

### Detaillierte Beschreibung der Ausführungsbeispiele

Gleiche Bezugszeichen bezeichnen in allen Figuren gleiche Gegenstände.

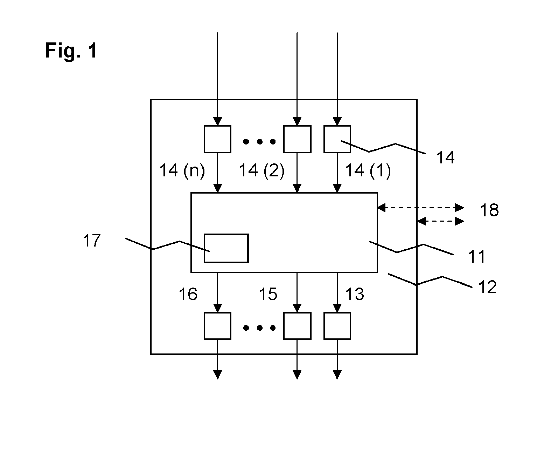

Figur 1 zeigt eine Ausführungsform einer Vorrichtung zur Ermittlung von Objekten gemäß dem Stand der Technik.

Ein Fahrzeug 12 umfasst mindestens ein Steuergerät 11. Dem Steuergerät 11 werden von mindestens einem Sensor 14 Daten zur Verfügung gestellt. Es können weitere Sensoren 14 (1), 14 (2), ... 14 (n) vorhanden sein. Die Sensordaten können dem Steuergerät 11 direkt über eine Schnittstelle übermittelt werden oder alternativ über ein Bussystem, wie beispielsweise dem CAN-Bus. Das Steuergerät enthält mindestens einen Speicher 17 zur Speicherung und Verarbeitung der Sensordaten, der kinematischen Betriebsdaten und der Fahrzeugdaten. Das Steuergerät 11 steuert mindestens einen Aktor 13 an. Weitere Aktoren 15, 16 können beispielsweise ein Starter oder ein Schließelement sein. Das erste Fahrzeug 12 bzw. das Steuergerät 11 können auch weitere Schnittstellen 18 aufweisen, beispielsweise für die Interaktion mit einem Fahrer in Form von Abfragen und Hinweisen. Der Sensor 14 kann beispielsweise ein Ultraschallsensor sein.

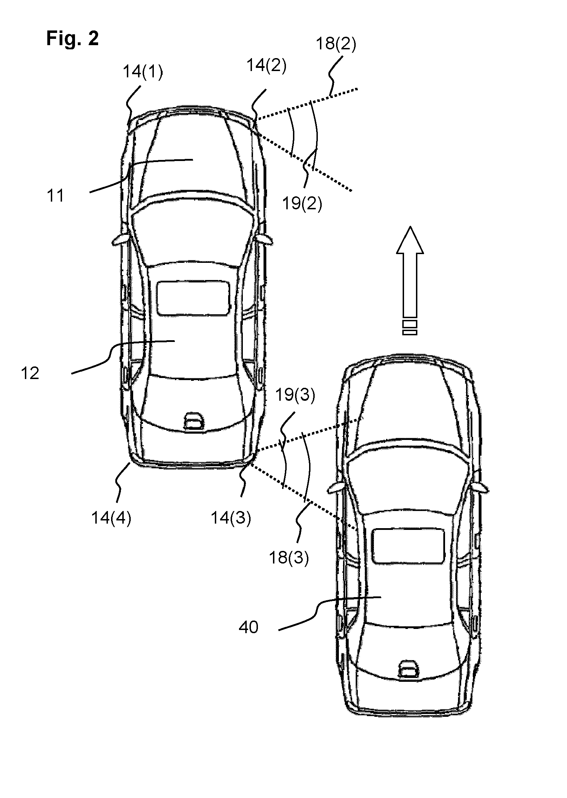

Figur 2 offenbart in einer Draufsicht die schematische Darstellung des erfindungsgemäßen Verfahrens anhand der Fahrsituation mit zwei Fahrzeugen 12, 40. Das erste Fahrzeug 12 fährt langsam, beispielsweise mit einer Geschwindigkeit von weniger als 10 km/h, oder steht still. Das weitere Fahrzeug 40 fährt, im Vergleich zu der Geschwindigkeit des Fahrzeugs 12, mit einer höheren Geschwindigkeit, beispielsweise 30 km/h.

Das erste Fahrzeug 12 umfasst mindestens ein Steuergerät 11 und Sensoren 14 (1) bis 14 (4). Jeder der Sensoren 14 hat einen akustischen Öffnungswinkel 18, von beispielsweise 90 Grad.

Mit Hilfe des mindestens einen Ultraschallsensors 14 können Objekte im Umfeld des ersten Fahrzeugs 12 detektiert werden. Hierzu werden Signale durch mindestens einen Sensor 14 (2), 14 (3) gesendet und empfangen und aus den Signallaufzeiten der reflektierten Signale Entfernungen berechnet und Raumkoordinaten zu den Objekten ermittelt. Die ausgesandten Signale sind als Halbwellen 19 (2), 19 (3) in Figur 2 dargestellt.

Anhand der reflektierten Signale wird eine Klassifizierung der Objekte durch das Steuergerät 11 des ersten Fahrzeugs 12 durchgeführt. Hierzu wird ein Verhältnis von reflektierten Signalen der Sensoren 14 (2), 14 (3) mit Mehrfachechos zu einer Gesamtzahl von reflektierten Signalen der Sensoren 14 (2), 14 (3) innerhalb eines Bewertungszeitraums durch das Steuergerät 11 berechnet.

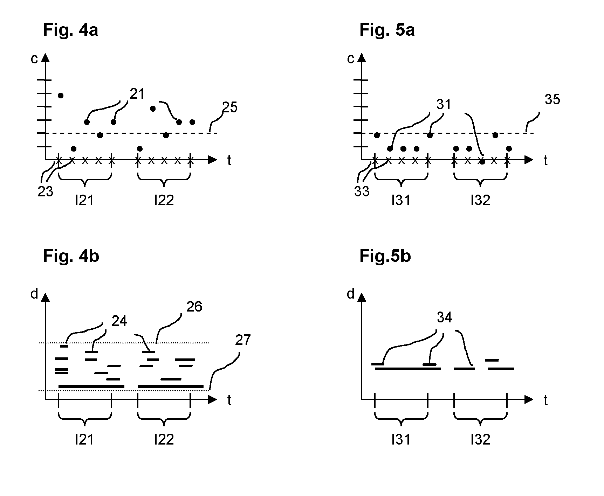

In Figur 4a ist für die Fahrsituation der zwei Fahrzeuge 12, 40 eine mögliche Anzahl c von reflektierten Signalen 21 über einer Zeit t in einem Diagramm dargestellt. Innerhalb von Bewertungszeiträumen I21, I22 wird mindestens ein Signal ausgesendet 23 und reflektierte Signale empfangen 21, wobei eine Dauer der Bewertungszeiträume I21, I22 beispielsweise 500ms beträgt und die Bewertungszeiträume I21, I22 mit einer auf dem Steuergerät 11 gespeicherten Frequenz durchgeführt werden. Anhand eines vorgebbaren Schwellenwerts 25 werden die reflektierten Signale der Sensoren 14 (2), 14 (3), die über dem Schwellenwert 25 liegen, als reflektierte Signale 21 mit Mehrfachechos vom Steuergerät 11 verarbeitet. In Figur 4a finden beispielsweise zwei Bewertungszeiträume I21, I22 statt, wobei pro Bewertungszeitraum I21, I22 fünf Signale ausgesendet werden. In beiden Bewertungszeiträumen I21, I22 werden in Summe zwei Einfachechos und acht Mehrfachechos, wobei sechs Mehrfachechos oberhalb des Schwellenwerts 25 liegen, empfangen.

In Figur 4b sind für die Fahrsituation mit zwei Fahrzeugen 12, 40 anhand von Signallaufzeiten von reflektierten Signalen 21 berechnete Abstände d über einer Zeit t dargestellt. In einer weiteren Ausführungsform können Schwellenwerte 26, 27 für mindestens einen Bereich vorgegeben werden, beispielsweise 0,5 m, innerhalb dem alle gemessenen Abstände d einem Objekt, beispielweise dem weiteren Fahrzeug 40 zugeordnet werden.

Eine erste Gruppe von Objekten klassifiziert beispielsweise bodennahe Objekte wie Objekte wie Bordsteine und/oder Leitplanken, bei denen der Fahrer des Fahrzeugs keine Warnung erhält. Andere Objekte, beispielsweise nicht-bodennahe Objekte wie Autos, Fußgänger und/oder Fahrradfahrer, werden einer zweiten Gruppe zugeordnet, bei denen eine Warnung an den Fahrer erfolgt.

Wie aus Figur 4a und 4b ersichtlich, hat das Verhältnis von reflektierten Signalen mit Mehrfachechos zur Gesamtzahl an reflektierten Signalen innerhalb der beiden Bewertungszeiträumen I21, I22 einen Wert von 0,6. Anhand eines in dem Steuergerät 11 gespeicherten Schwellenwertes, beispielsweise 0,4, wird das Objekt der zweiten Gruppe von Objekten zugeordnet.

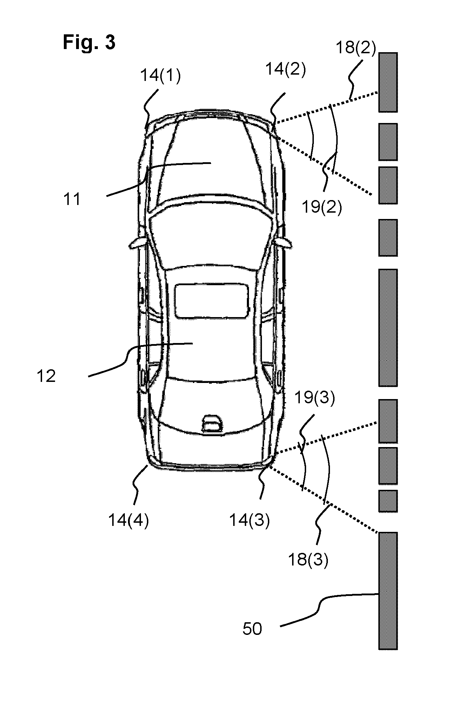

Figur 3 offenbart in einer Draufsicht die schematische Darstellung des erfindungsgemäßen Verfahrens anhand einer Fahrsituation des ersten Fahrzeugs 12 und einem Bordstein 50. Das erste Fahrzeug 12 fährt langsam, beispielsweise mit einer Geschwindigkeit von weniger als 10 km/h, oder steht still.

In Figur 5a ist für die Fahrsituation gemäß Figur 3 eine mögliche Anzahl c von reflektierten Signalen 31 über einer Zeit t in einem Diagramm dargestellt. Innerhalb von Bewertungszeiträumen I31, I32 wird mindestens ein Signal ausgesendet 33 und reflektierte Signale empfangen 31, wobei eine Dauer der Bewertungszeiträume I31, I32 beispielsweise 500ms beträgt und die Bewertungszeiträume I31, I32 mit einer auf dem Steuergerät 11 gespeicherten Frequenz durchgeführt werden. Anhand eines vorgebbaren Schwellenwerts 35 werden die reflektierten Signale der Sensoren 14 (2), 14 (3), die über dem Schwellenwert 35 liegen, als reflektierte Signale 31 mit Mehrfachechos vom Steuergerät 11 verarbeitet. In Figur 5a finden beispielsweise zwei Bewertungszeiträume I31, I32 statt, wobei pro Bewertungszeitraum I31, I32 fünf Signale ausgesendet werden. In beiden Bewertungszeiträumen I31, I32 werden in Summe sechs Einfachechos, drei Mehrfachechos, wobei alle Mehrfachechos unterhalb des Schwellenwerts 35 liegen, und einmal kein Echo empfangen.

In Figur 5b sind für die Fahrsituation mit dem ersten Fahrzeug 12 und dem Bordstein 50 aus Signallaufzeiten von reflektierten Signalen 31 berechnete Abstände d über einer Zeit t dargestellt.

Wie aus Figur 4a und 4b ersichtlich, hat das Verhältnis von reflektierten Signalen mit Mehrfachechos zur Gesamtzahl an reflektierten Signalen innerhalb der beiden Bewertungszeiträumen I31, I32 einen Wert von 0,3. Anhand des in dem Steuergerät 11 gespeicherten Schwellenwerts, beispielsweise 0,4, wird das Objekt der ersten Gruppe zugeordnet.

In Abhängigkeit der Zuordnung von erkannten Objekten im Umfeld des ersten Fahrzeugs 12 zu der ersten bzw. zweiten Gruppe, gibt das Steuergerät 11 keine bzw. eine Warnung an den Fahrer aus, beispielweise in Verbindung mit einem Assistenzsystem zur Erkennung von Objekten im Toten-Winkel eines ersten Fahrzeugs 12.

Zur Erhöhung einer Häufigkeit von korrekten Zuordnungen zu den mindestens zwei Gruppen, wird vor einer Zuordnung eines erkannten Objekts im Umfeld des ersten Fahrzeugs 12 zu einer Gruppe mindestens ein Signal 23, 33 innerhalb von mindestens drei Bewertungszeiträumen ausgesendet und empfangen.

Kann ein Objekt nach Durchführung der mindestens drei Bewertungszeiträume nicht ausschließlich einer Gruppe zugeordnet werden, dann wird das Objekt der mehrheitlich ermittelten Gruppe zugeordnet. In einer alternativen Ausführungsform wird das Objekt der zweiten Gruppe zugeordnet, so dass sichergestellt ist, dass eine Warnung an den Fahrer ergeht.

In einer weiteren vorteilhaften Ausführungsform erfolgt dann bereits eine Warnung, wenn nur der hintere Sensor 14 (3) des Fahrzeugs ein Objekt im Umfeld des Fahrzeugs erfasst und das Steuergerät der zweiten Gruppe zuordnet, während der vordere Sensor 14 (2) keine reflektierten Signale empfängt. Dies kann beispielsweise auftreten, wenn ein in den Erfassungsbereich des hinteren Ultraschallsensors 14 (3) einfahrendes weiteres Fahrzeug 40 nach hinten versetzt zu dem ersten Fahrzeug 12 anhält, so dass das weitere Fahrzeug 40 außerhalb des akustischen Öffnungswinkels 18 (2) des Sensors 14 (2) liegt.

## Patentansprüche

1. Verfahren zum Betreiben eines Assistenzsystems eines Fahrzeugs (12) mit mindestens einem Ultraschallsensor (14), wobei der Ultraschallsensor (14) in Abhängigkeit von mindestens einer Betriebsbedingung des Fahrzeugs (12) Ultraschallsignale (19) aussendet und empfängt, wobei ein Steuergerät (11) aus Signallaufzeiten von reflektierten Ultraschallsignalen Abstände zu Objekten im Umfeld des Fahrzeugs (12) berechnet, wobei das Steuergerät (11) anhand der reflektierten Ultraschallsignale eine Klassifizierung der Objekte durchführt, **dadurch gekennzeichnet, dass** bei langsamer Fahrt und/oder Stillstand des Fahrzeugs das Steuergerät (11) die Klassifizierung anhand einer Bewertung eines Verhältnisses von detektierten reflektierten Ultraschallsignalen mit Mehrfachechos zur Gesamtzahl an detektierten reflektierten Ultraschallsignalen des Ultraschallsensors innerhalb eines Bewertungszeitraums durchführt.

2. Verfahren nach Anspruch 1, **dadurch gekennzeichnet, dass** bei einem Verhältnis von kleiner oder gleich 0,4, die Klassifizierung das Objekt einer ersten Gruppe und bei einem Verhältnis größer als 0,4 einer zweiten Gruppe zuordnet.

3. Verfahren nach einem der vorhergehenden Ansprüche, **dadurch gekennzeichnet, dass** bei Objekten die der ersten Gruppe bzw. zweiten Gruppe zugeordnet sind keine Warnung bzw. eine Warnung den Fahrer ergeht.

4. Verfahren nach einem der vorhergehenden Ansprüche, **dadurch gekennzeichnet, dass** zur Erhöhung einer Häufigkeit von korrekten Zuordnungen zu den mindestens zwei Gruppen mehrere Klassifizierungen in mindestens zwei Bewertungszeiträumen mit einer auf dem Steuergerät (11) gespeicherten Frequenz durchgeführt werden.

5. Verfahren nach Anspruch 4, **dadurch gekennzeichnet, dass** bei Durchführung von mindestens drei Bewertungszeiträumen für ein Objekt, wobei das Objekt in den jeweiligen Bewertungszeiträumen nicht ausschließlich einer Gruppe zugeordnet wurde, das Objekt der mehrheitlich ermittelten Gruppe zugeordnet wird.

6. Verfahren nach einem der vorhergehenden Ansprüche, **dadurch gekennzeichnet, dass** die Dauer des Bewertungszeitraums 500ms beträgt.

7. Verfahren nach einem der vorhergehenden Ansprüche, **dadurch gekennzeichnet, dass** Objekte bei denen Abstände von weniger als 0,5 m zwischen den Mehrfachechos berechnet werden, als zusammengehörend bewertet werden.

8. Verfahren nach einem der vorhergehenden Ansprüche, **dadurch gekennzeichnet, dass** bei der langsamen Fahrt des Fahrzeugs (12) eine maximale Geschwindigkeit von ungefähr 10 km/h erreicht wird.

9. Vorrichtung für ein Assistenzsystem eines Fahrzeugs mit mindestens einem Ultraschallsensor (14), wobei der Ultraschallsensor in Abhängigkeit von mindestens einer Betriebsbedingung des Fahrzeugs Ultraschallsignale (19) aussendet und empfängt, wobei ein Steuergerät (11) aus Signallaufzeiten von reflektierten Ultraschallsignalen Abstände zu Objekten im Umfeld des Fahrzeugs (12) berechnet, wobei das Steuergerät (11) anhand der reflektierten Ultraschallsignale eine Klassifizierung der Objekte durchführt, **dadurch gekennzeichnet, dass** bei langsamer Fahrt und/oder Stillstand des Fahrzeugs (12) das Steuergerät die Klassifizierung anhand einer Bewertung eines Verhältnisses von Detektionen von ausgesendeten Ultraschallsignalen mit Mehrfachechos zur Gesamtzahl von Detektionen des Ultraschallsensors innerhalb eines Bewertungszeitraums durchführt.

10. Verwendung eines Verfahrens nach einem der vorhergehenden Ansprüche für ein Assistenzsystem zur Erkennung von Objekten im Toten-Winkel ("side view assistent") eines Fahrzeugs.

11. Computerprogramm mit Programmcodemitteln, um alle Schritte eines Verfahrens nach einem der Ansprüche 1 bis 8 durchzuführen, wenn das Computerprogramm auf einem Computer oder einer entsprechenden Recheneinheit ausgeführt wird.

12. Computerprogrammprodukt mit Programmcodemitteln, die auf einem computerlesbaren Datenträger gespeichert sind, um alle Schritte eines Verfahrens nach einem der Ansprüche 1 bis 8 durchzuführen, wenn ein Computerprogramm nach Anspruch 11 auf einem Computer oder einer entsprechenden Recheneinheit ausgeführt wird.
